# EUROPÄISCHE PATENTSCHRIFT

(11) **EP 2 504 741 B1**
(45) Veröffentlichungstag und Bekanntmachung des Hinweises auf die Patenterteilung: **03.06.2015**
(21) Anmeldenummer: 10781658.9
(22) Anmeldetag: 15.11.2010
(51) Int. Cl.: G05B 19/401

(54) **VERFAHREN ZUM ERSTELLEN EINES ROBOTERMODELLS UND INDUSTRIEROBOTER**
METHOD FOR CREATING A ROBOT MODEL AND INDUSTRIAL ROBOT
PROCÉDÉ D'ÉLABORATION D'UN MODÈLE DE ROBOT, ET ROBOT INDUSTRIEL

(30) Priorität: 24.11.2009 DE 102009054421
(43) Veröffentlichungstag der Anmeldung: 03.10.2012
(73) Patentinhaber: KUKA Roboter GmbH, 86165 Augsburg (DE)
(72) Erfinder: NITZ, Gernot, 86163 Augsburg (DE); TSCHARNUTER, Dietmar, 86316 Stätzling (DE); MICHEL, Wolfgang, 86868 Mittelneufnach (DE); RÖSSIG, René, Augsburg 86159 (DE); MÜLLER, Michael, 86150 Augsburg (DE)
(74) Vertreter: Funk, Alexander Tobias
(86) Internationale Anmeldenummer: PCT/EP2010/067495
(87) Internationale Veröffentlichungsnummer: WO 2011/064120

(56) Entgegenhaltungen:
- EP-A2- 0 353 585
- EP-A2- 1 189 121
- US-A- 4 362 977

## Beschreibung

Die Erfindung betrifft einen Industrieroboter und ein Verfahren zum Erstellen eines Robotermodells.

Industrieroboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise Roboterarme mit mehreren nacheinander folgenden Gliedern auf, die bezüglich Achsen mittels elektrischer Antriebe bewegt werden können. Die elektrischen Antriebe werden von einer programmierbaren Steuerung (Steuervorrichtung) des Industrieroboters angesteuert, um während des Betriebs die Bewegungsabläufe des Industrieroboters zu steuern bzw. regeln.

Die elektrischen Antriebe weisen jeweils einen elektrischen Motor auf, der normalerweise mittels eines Getriebes mit dem relevanten Glied des Roboterarms verbunden ist.

Für eine zufriedenstellende Steuerung oder Regelung der Roboter weisen die Steuerungen physikalische Modelle des Roboters auf. Die allgemeinen räumlichen Bewegungen des Roboters werden mit einem kinematischen Modell des Roboters beschrieben, das im Wesentlichen die Geometrie des Roboters ohne auf den Roboter wirkende Kräfte oder Momente beschreibt. Durch die eventuell auch lastabhängigen Kräfte oder Momente hervorgerufene Verformungen des Roboters können jedoch dazu führen, dass sich eine Ist-Position des Roboters von seiner Soll-Position unterscheidet.

Für eine verbesserte dynamische Steuerung oder Regelung kann der Roboter auch ein Dynamik-Modell aufweisen, das unter Berücksichtigung von Masseeigenschaften einen Zusammenhang zwischen Koordinaten der Achsen des Roboters, deren Geschwindigkeiten und Beschleunigungen, sowie Kräften und Momenten beschreibt.

Um den eventuell auftretenden Unterschied zwischen einer Ist-Position des Roboters und seiner Soll-Position im kinematischen Modell zumindest zu reduzieren, können für die statischen Positionsfehler die Masseeigenschaften und Elastizitäten des Roboters berücksichtigt werden, wodurch die Absolutgenauigkeit des Roboters verbessert wird. Dies kann mittels eines sogenannten absolutgenauen Modells des Roboters berücksichtigt werden, d.h. ein Modell z.B. mit Berücksichtigung von in der Regel exemplarspezifischen statischen Verformungen.

Mit Industrierobotern werden Posen, d.h. Position und Orientierung insbesondere seines so genannten Tool Center Points (TCP), im Raum dadurch angefahren, dass die Motoren so angetrieben werden, dass eine bestimmte Winkelstellung einzelner Achsen bzw. Glieder des Industrieroboters erreicht werden. Die Motoren sind in der Regel über Getriebe mit den Gliedern verbunden.

Die Positionierung, d.h. das Einstellen des Roboterarms derart, dass die gewünschten Pose angefahren wird, kann jedoch nur mit einer bestimmten Genauigkeit erfolgen. Diese Genauigkeit wird z.B. begrenzt durch Fertigungstoleranzen, die Genauigkeit von eventuell verwendeten Messsystemen oder auch durch ein Getriebespiel der Getriebe.

Die EP 1 189 121 A2 offenbart ein Verfahren zum Kompensieren von statischen Positionsfehlern und Orientierungsfehlern bei Bearbeitungsmaschinen, wie z.B. Werkzeugmaschinen oder Robotern.

Die EP 0 353 585 A2 offenbart ein Verfahren zur Bahn- und Positionskorrektur eines Werkzeugs eines Roboters. Unter Ausnutzung der Symmetriebedingungen eines jeweiligen Bezugskoordinatensystems werden nur so viele Punkte vermessen, wie es absolut notwendig ist.

Die US 4,362,977 offenbart ein Verfahren zum Kalibrieren eines Roboters. Der Roboterarm des Roboters wird in verschiedene Positionen bewegt und anschließend vermessen.

Aufgabe der Erfindung ist es, Vorraussetzungen zum Erstellen eines verbesserten Robotermodells anzugeben, um insbesondere die Auswirkungen eines Getriebespiels zumindest zu reduzieren.

Die Aufgabe der Erfindung wird gelöst durch ein Verfahren zum Erstellen eines Robotermodells eines Industrieroboters, der einen Roboterarm mit mehreren, nacheinander folgenden Gliedern aufweist, die mittels Antrieben über Getriebe bezüglich Achsen gesteuert durch eine Steuervorrichtung des Industrieroboters verstellbar sind, aufweisend folgende Verfahrensschritte:
- Bewegen des Roboterarms in mehrere Posen, wobei zumindest eines der Glieder zumindest beim Anfahren der einzelnen Posen jeweils in derselben ersten Bewegungsrichtung mittels seines Antriebs bewegt wird, und
- jeweiliges Vermessen des Roboterarms in seinen Posen, um das Robotermodell zu erhalten.

Ein weiterer Aspekt der Erfindung betrifft einen Industrieroboter, aufweisend einen Roboterarm mit mehreren, nacheinander folgenden Gliedern, die mittels Antrieben über Getriebe bezüglich Achsen gesteuert durch eine Steuervorrichtung des Industrieroboters bewegbar sind, wobei in der Steuervorrichtung ein Robotermodell des Industrieroboters gespeichert ist, das gemäß dem erfindungsgemäßen Verfahren erstellt wurde.

Erfindungsgemäß wird demnach für das Erstellen des Robotermodells, das insbesondere ein absolutgenaues Robotermodell ist, der Industrieroboter mittels seiner Antriebe, die insbesondere elektrische Antriebe sind, in die verschiedenen Posen gebracht und dann vermessen, um das Robotermodell zu erhalten. Das Vermessen als solches ist dem Fachmann geläufig und wird daher nicht weiter erklärt. Um nun die Positioniergenauigkeit beim Erreichen der Pose zu steigern, wird erfindungsgemäß zumindest beim Anfahren der einzelnen Posen stets zumindest eines der Glieder von seinem Antrieb derart bewegt, dass es die jeweiligen Posen jeweils in derselben ersten Bewegungsrichtung anfährt. D.h. bei der Vermessung des Industrieroboters fährt dieser die Vermessungsposen immer von einer bestimmten Richtung an, insbesondere bezogen auf das der relevanten Achse zugeordnete Getriebe. Dadurch wird erreicht, dass ein Robotermodell erstellt werden kann, welches einem fertigungstoleranzbedingten Getriebespiel in eine bestimmte Getrieberichtung, das der ersten Bewegungsrichtung zugeordnet ist, unterliegt. Unter der Verwendung dieses Robotermodells und gegebenenfalls einer geeigneten Positionierstrategie, bei der die einzelnen Positionen ebenfalls immer von der gleichen Bewegungsrichtung angefahren werden wie bei der Vermessung, kann dann eine gesteigerte Positioniergenauigkeit erreicht werden.

Diese Positionierstrategie umfasst gegebenenfalls eine Feinpositionierung, bei der sichergestellt werden kann, dass beispielsweise nach einer Vorpositionierung durch eine herkömmliche Bahnplanung gegebenenfalls eine Feinpositionierung erfolgt. Dabei wird beispielsweise eine Relativbewegung ausgeführt, die mindestens so groß ist, dass die gewünschte Getriebeflanke sicher anliegt. Die Feinpositionierung kann sowohl in der Bahnplanung implementiert oder auch auf einer höheren Ebene realisiert werden.

Die Positionierstrategie kann in der Bahnplanung erfolgen, sodass der Anwender keinen zusätzlichen Aufwand bei der Inbetriebnahme hat. Gegebenfalls kann diese Option aus-/einschaltbar sein. Die Positionierstrategie kann auch vom Anwender im Rahmen der Inbetriebnahme programmiert werden, beispielsweise durch Vorhaltepunkte.

Die Achse, bezüglich der das relevante Glied verstellbar ist, ist vorzugsweise eine Drehachse, bezüglich der das relevante Glied drehbar ist. Somit wird für das Erstellen des Robotermodells das relevante Glied bezüglich dieser Drehachse zumindest beim Anfahren der Posen stets bezüglich einer ersten Drehrichtung gedreht.

Die Drehachse, um die das relevante Glied drehbar ist, ist vorzugsweise oder gar ausschließlich eine vertikal verlaufende Drehachse. Diese Drehachse ist insbesondere die sogenannte Achse 1.

Der Roboterarm kann eine Roboterhand aufweisen und die Drehachse, um die das relevante Glied drehbar ist, ist eine der Roboterhand zugeordnete Handachse.

Der Roboterarm des erfindungsgemäßen Industrieroboters kann als eines der Glieder eine um eine horizontal verlaufende Achse drehbar gelagerte Schwinge und als ein weiteres der Glieder einen bezüglich einer weiteren horizontal verlaufenden Achse gelagerten, relativ zur Schwinge drehbar gelagerten Ausleger aufweisen. Dann können die Posen entweder lediglich in einer Position, in der der Ausleger bezüglich der weiteren horizontal verlaufenden Achse entweder eine Winkelstellung zwischen 0° und 180° oder eine Winkelstellung zwischen 180° und 360° bezüglich einer vertikal verlaufenden Achse einnehmen. Gemäß dieser Variante kann somit der Einfluss des der weiteren vertikal verlaufenden Achse für das Robotermodell berücksichtigt werden. Die horizontal verlaufende Achse kann gegebenenfalls auch als Achse 2 und die weitere horizontal verlaufende Achse kann gegebenenfalls auch als Achse 3 bezeichnet werden. Die vertikal verlaufende Achse ist gegebenenfalls die so genannte Achse 1, wenn die Schwinge z.B. bezüglich ihrer horizontal verlaufenden Achse drehbar an einem bezüglich der vertikal verlaufenden Achse drehbar gelagerten Karussell gelagert ist.

Gemäß einer Ausführungsform des erfindungsgemäßen Verfahrens weist dieses folgende zusätzliche Verfahrensschritte auf:
- Bewegen des Roboterarms in mehrere weitere Posen, wobei das zumindest eine der Glieder zumindest beim Anfahren der einzelnen weiteren Posen jeweils in derselben, zur ersten Bewegungsrichtung entgegen gesetzten zweiten Bewegungsrichtung mittels seines Antriebs bewegt wird, und
- jeweiliges Vermessen des Roboterarms in seinen weiteren Posen, um ein weiteres Robotermodell vom Industrieroboter zu erhalten.

Somit werden zwei Robotermodelle, die insbesondere absolutgenaue Robotermodelle sind, erstellt, bei denen je nach Bewegungsrichtung, im Falle einer Drehachse als relevante Achse je nach Drehrichtung des entsprechenden Gliedes ein Getriebespiel des zugeordneten Getriebes mitberücksichtigt wird. Gemäß dieser Variante werden gegebenenfalls demnach zwei verschiedene Datensätze für die relevante Achse, insbesondere für die Achse 1, hinterlegt. Im Betrieb des erfindungsgemäßen Industrieroboters ist es dann möglich, dass beim Erreichen einer Position in Richtung der ersten Bewegungsrichtung, gegebenenfalls in Richtung der ersten Drehrichtung für die Steuerung bzw. Regelung des Industrieroboters das Robotermodell und für die entgegen gesetzte Bewegungsrichtung bzw. Drehrichtung das weitere Robotermodell bzw. die entsprechenden Datensätze für die relevante Achse verwendet wird. Im Betrieb des Industrieroboters kann z.B. basierend auf einer der Bewegung zugeordneten Bahnplanung zwischen den beiden Robotermodellen hin- und her geschaltet werden, da es durch die Bahnplanung bekannt ist, von welcher Richtung die relevante Achse in ihre Endposition fährt.

Gegebenfalls können auch für weitere Achsen, insbesondere für die sogenannten Achsen 2 und 3, aber auch für die Achsen der Roboterhand, den sogenannten Handachsen verschiedene Datensätze verwendet werden.

Weist der Roboterarm des erfindungsgemäßen Industrieroboters als eines der Glieder die um die horizontal verlaufende Achse drehbar gelagerte Schwinge und als ein weiteres der Glieder den bezüglich der weiteren horizontal verlaufenden Achse gelagerten, relativ zur Schwinge drehbar gelagerten Ausleger auf, so kann es vorgesehen sein, für das Robotermodell den Ausleger entweder lediglich in einer Position, in der der Ausleger bezüglich der weiteren horizontal verlaufenden Achse entweder eine Winkelstellung zwischen 0° und 180° oder eine Winkelstellung zwischen 180° und 360° bezüglich der vertikal verlaufenden Achse einnehmen zu lassen, und für das weitere Robotermodell den Ausleger der entgegen gesetzten Position einnehmen zu lassen.

Ein weiterer Aspekt der Erfindung betrifft ein Verfahren zum Planen einer Bahn eines Industrieroboters, der einen Roboterarm mit mehreren, nacheinander folgenden Gliedern aufweist, die mittels Antrieben über Getriebe bezüglich Achsen gesteuert durch eine Steuervorrichtung des Industrieroboters bewegbar sind, und in der Steuervorrichtung ein Robotermodell des Industrieroboters gespeichert ist, das gemäß dem erfindungsgemäßen Verfahren erstellt wurde, aufweisend Planen einer durchzuführenden Bahn des Industrieroboters basierend auf dem Robotermodell, wobei der Roboterarm derart in Posen bewegt werden soll, dass zumindest das relevante Glied der Glieder zumindest beim Anfahren der einzelnen Posen relativ zu seiner Achse jeweils in derselben ersten Bewegungsrichtung mittels seines Antriebs bewegt wird. Ist in der Steuervorrichtung auch das weitere Robotermodell hinterlegt, dann kann die durchzuführende Bahn des Industrieroboters derart geplant werden, dass je nachdem, mit welcher Bewegungsrichtung des relevanten Glied der Glieder eine Pose anfährt, das Planen der durchzuführenden Bahn auf dem Robotermodell oder auf dem weiteren Robotermodell basiert.

Ein Ausführungsbeispiel der Erfindung ist exemplarisch in den beigefügten schematischen Zeichnungen dargestellt. Es zeigen:
- Fig. 1: einen Industrieroboter und
- Fig. 2: ein mit einem elektrischen Motor gekoppeltes Getriebe.

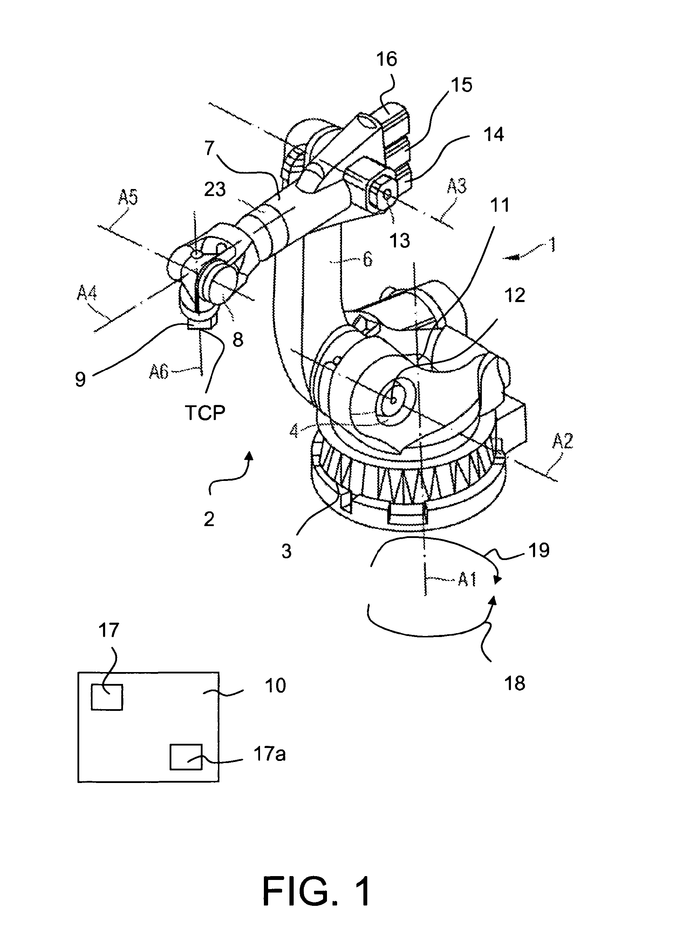

Die Fig. 1 zeigt in einer perspektivischen Darstellung einen Industrieroboter 1 mit einem Roboterarm 2.

Der Roboterarm 2 umfasst im Falle des vorliegenden Ausführungsbeispiels mehrere, nacheinander angeordnete und mittels Gelenke verbundene Glieder bzw. Segmente. Bei den Gliedern handelt es sich insbesondere um ein ortsfestes oder bewegliches Gestell 3 und ein relativ zum Gestell 3 um eine vertikal verlaufende Achse A1, die auch als Achse 1 bezeichnet wird, drehbar gelagertes Karussell 4. Weitere Glieder des Roboterarms 2 sind im Falle des vorliegenden Ausführungsbeispiels eine Schwinge 6, ein Ausleger 7 und eine vorzugsweise mehrachsige Roboterhand 8 mit einem Flansch 9. Die Schwinge 6 ist am unteren Ende z.B. an einem nicht näher dargestellten Schwingenlagerkopf auf dem Karussell 4 um eine vorzugsweise horizontale Achse A2, die auch als Achse 2 bezeichnet wird, schwenkbar gelagert. Am oberen Ende der Schwinge 6 ist wiederum um eine ebenfalls vorzugsweise horizontale Achse A3, die auch als Achse 3 bezeichnet wird, der Ausleger 7 schwenkbar gelagert. Dieser trägt endseitig die Roboterhand 8 mit ihren vorzugsweise drei Achsen A4, A5, A6.

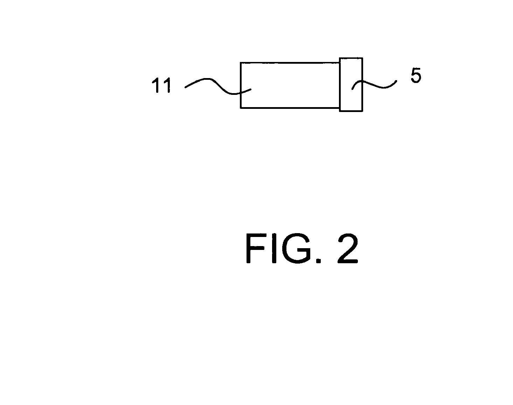

Um den Industrieroboter 1 bzw. dessen Roboterarm 2 zu bewegen, umfasst dieser in allgemein bekannter Weise mit einer Steuervorrichtung 10 verbundene Antriebe, die insbesondere elektrische Antriebe sind. Die elektrischen Motoren 11-16 der Antriebe sind über Getriebe mit ihren Gliedern gekoppelt, damit diese um die Achsen A1-A6 gedreht werden können. Die Fig. 2 zeigt als Beispiel den Motor 11 mit seinem ihm zugeordneten Getriebe 5.

Im Falle des vorliegenden Ausführungsbeispiels ist der Motor 11 vorgesehen, über das Getriebe 5 das Karussell 4 bezüglich der Achse A1, der Motor 12 die Schwinge 6 bezüglich der Achse A2, der Motor 13 den Ausleger 6 bezüglich der Achse A3 und die Motoren 14-16 die Glieder der Roboterhand 8 bezüglich der Achsen A4-A6 zu drehen.

Auf der Steuervorrichtung 10 läuft ein Rechenprogramm, aufgrund dessen eine Bewegung des Roboterarms 2, insbesondere der Flansch 9 des Roboterarms bzw. des so genannte Tool Center Points TCP eine vorgegebene Bewegung durchführt. Um zumindest eine zufriedenstellende Ist-Bewegung zu erhalten bzw. damit der Flansch 9 bzw. der TCP eine gewollte Pose, d.h. Position und Orientierung einnimmt, steuert die Steuervorrichtung 10 bzw. das auf ihr laufende Rechenprogramm die elektrischen Antriebe derart an, dass der Roboterarm 2 zur gewollten Pose des Tool Center Points TCP eine entsprechende Achsenstellung einnimmt.

Um diese Bewegung zumindest zufriedenstellend ausführen zu können, ist auf der Steuervorrichtung 10 eine Robotermodell 17 des Industrieroboters 1 gespeichert. Das Robotermodell 17 ist insbesondere ein absolutgenaues Robotermodell des Industrieroboters 1 und modelliert wenigstens die Achsenstellungen zu mehreren gewünschten Posen des Tool Center Points TCPs.

Im Falle des vorliegenden Ausführungsbeispiels wird das Robotermodell 17 folgendermaßen erstellt:
Zunächst wird der Roboterarm 2 z.B. mittels eines nicht näher dargestellten Eingabegerätes und mittels seiner Antriebe in eine erste Achsenstellung gebracht, so dass der Tool Center Point TCP eine vorgegebene Pose einnimmt. Wenigstens eines der Glieder des Roboterarms 2 wird zumindest beim Anfahren dieser Pose bezüglich einer ersten Bewegungsrichtung 18 bewegt. Im Falle des vorliegenden Ausführungsbeispiels handelt es sich bei dem Glied, das zumindest beim Anfahren der Pose bezüglich der ersten Bewegungsrichtung 18 bewegt wird, um das Karussell 4, sodass zumindest beim Anfahren dieser Pose das Karussell 4 bezüglich seiner Achse A1 bezüglich der ersten Bewegungsrichtung 18 gedreht wird.

Hat der Industrieroboter 1 seine die der Pose zugeordnete Achsenstellung eingenommen, wird der Roboterarm 2 mittels eines nicht näher dargestellten, dem Fachmann jedoch bekannten Messsystem vermessen, um für diese der Pose zugeordneten Achsenstellung, das Robotermodell 17 zu erhalten.

Dies wird zumindest einmal oder gar öfters wiederholt, d.h. anschließend wird der Roboterarm 2 z.B. mittels des nicht näher dargestellten Eingabegerätes in wenigstens eine weitere Achsenstellung gebracht, so dass der Tool Center Point TCP eine der weitern Achsenstellung zugeordnete weitere Pose bzw. den Achsenstellungen zugeordneten weitere Posen einnimmt. Wenigstens eines der Glieder des Roboterarms 2 wird zumindest beim Anfahren der dieser Pose bzw. Posen bezüglich der ersten Bewegungsrichtung 18 bewegt. Im Falle des vorliegenden Ausführungsbeispiels wird also zumindest beim Anfahren dieser Pose bzw. dieser Posen das Karussell 4 um seine Achse A1 derart gedreht, sodass zumindest beim Anfahren der Pose bzw. Posen das Karussell 4 bezüglich seiner Achse A1 bezüglich der ersten Bewegungsrichtung 18 gedreht wird.

Anschließend wird der Roboterarm 2 wieder vermessen, um für diese Achsenstellung bzw. Achsenstellungen das Robotermodell 17 zu erhalten.

Im Falle des vorliegenden Ausführungsbeispiels kann es auch vorgesehen sein, dass für das Erstellen des Robotermodells 17 der Roboterarm 2 derart betrieben wird, dass zum Einnehmen der Posen der Ausleger 7 bezüglich der Achse A3, mittels derer der Ausleger 7 relativ zur Schwinge 6 drehbar gelagert ist, entweder eine Winkelstellung zwischen 0° und 180° oder eine Winkelstellung zwischen 180° und 360° bezüglich der vertikal verlaufenden Achse A1, bezüglich derer das Karussell 4 drehbar gelagert ist, einnimmt.

Um eine Bahn, auf der der Industrieroboter 1 den Tool Center Point TCP während einer Bewegung bewegen und gegebenenfalls ausrichten soll, ist im Falle des vorliegenden Ausführungsbeispiels ein Bahnplanungsprogramm auf der Steuervorrichtung 10 gespeichert. Dieses führt folgendes Bahnplanungsverfahren aus:
Die durchzuführende Bahn des Industrieroboters 1 wird basierend auf dem Robotermodell 17 geplant. Der Roboterarm 2 wird dabei derart virtuell in Posen bewegt, dass zumindest das Karussell 4 zumindest beim Anfahren der einzelnen Posen relativ zu seiner Achse A1 jeweils in derselben ersten Bewegungsrichtung 18 mittels seines Antriebs 11 bewegt wird.

Somit wird auch beim anschließenden Betrieb des Industrieroboters 1 zumindest das Karussell 4 zumindest beim Anfahren der einzelnen Posen relativ zu seiner Achse A1 jeweils in derselben ersten Bewegungsrichtung 18 mittels seines Antriebs 11 bewegt.

Gegebenfalls wird der Ausleger 7 derart ausgerichtet, dass er die entsprechende, dem Robotermodell 17 zugeordnete Winkelstellung einnimmt.

Im beschriebenen Ausführungsbeispiel wird zumindest das Karussell 4 zumindest beim Anfahren von Posen bezüglich der ersten Bewegungsrichtung 18 bezüglich seiner Achse A1 bewegt. Prinzipiell sind die beschriebenen Verfahren auch für andere Glieder, insbesondere für die Schwinge 6 und/oder den Ausleger 7 anwendbar.

Es kann auch vorgesehen sein, dass in der Steuervorrichtung 10 des Industrieroboters 1 ein weiteres Robotermodell 17a gespeichert ist, welches entstand, indem der Roboterarm 2 in mehrere weitere Posen bewegt wurde, wobei zumindest eines der Glieder, im Falle des vorliegenden Ausführungsbeispiels das Karussell 4, zumindest beim Anfahren der einzelnen weiteren Posen jeweils in derselben, zur ersten Bewegungsrichtung 18 entgegen gesetzten zweiten Bewegungsrichtung 19 mittels seines Antriebs bewegt wird. Anschließend wird der Roboterarm 2 in seinen weiteren Posen vermessen, um das weitere Robotermodell 17a vom Industrieroboter 1 zu erhalten.

Umfasst die Steuervorrichtung 10 die beiden Robotermodelle 17, 17a, dann wird im Falle des vorliegenden Ausführungsbeispiels die Bahn mittels folgendem modifizierten Bahnplanungsverfahren geplant, indem beim Anfahren einer gewünschten Pose je nach Drehrichtung bzw. Bewegungsrichtung 18, 19 des Karussells 4 entweder auf das Robotermodell 17 oder das Robotermodell 17a zurück gegriffen wird.

Somit wird auch beim anschließenden Betrieb des Industrieroboters 1 zumindest das Karussell 4 zumindest beim Anfahren der einzelnen Posen relativ zu seiner Achse A1 je nach Planung in der ersten Bewegungsrichtung 18 oder in der zweiten Bewegungsrichtung 19 mittels seines Antriebs bewegt.

## Patentansprüche

1. Verfahren zum Erstellen eines Robotermodells eines Industrieroboters, der einen Roboterarm (2) mit mehreren, nacheinander folgenden Gliedern (3-8) aufweist, die mittels Antrieben (11-16) über Getriebe (5) bezüglich Achsen (A1-A2) gesteuert durch eine Steuervorrichtung (10) des Industrieroboters (1) verstellbar sind, aufweisend folgende Verfahrensschritte:
- Bewegen des Roboterarms (2) in mehrere Posen, wobei zumindest eines der Glieder (4) zumindest beim Anfahren der einzelnen Posen jeweils in derselben ersten Bewegungsrichtung (18) mittels seines Antriebs (11) bewegt wird, und
- jeweiliges Vermessen des Roboterarms (2) in seinen Posen, um das Robotermodell (17) zu erhalten.

2. Verfahren nach Anspruch 1, bei dem das Robotermodell (17) ein absolutgenaues Robotermodell ist und/oder die Achse (A1), bezüglich der das relevante Glied (4)verstellbar ist, eine Drehachse ist, bezüglich der das relevante Glied (4) drehbar ist.

3. Verfahren nach Anspruch 2, bei dem die Drehachse (A1), um die das relevante Glied (4) drehbar ist, vorzugsweise oder ausschließlich eine vertikal verlaufende Drehachse (A1) ist.

4. Verfahren nach Anspruch 2, bei dem der Roboterarm (2) eine Roboterhand (8) aufweist und die Drehachse (A4-A6), um die das relevante Glied drehbar ist, eine der Roboterhand (8) zugeordnete Handachse ist.

5. Verfahren nach einem der Ansprüche 1 bis 4, bei dem der Roboterarm (2) als eines der Glieder eine um eine horizontal verlaufende Achse (A2) drehbar gelagerte Schwinge (6) und als ein weiteres der Glieder einen bezüglich einer weiteren horizontal verlaufenden Achse (A3) gelagerten, relativ zur Schwinge (6) drehbar gelagerten Ausleger (7) aufweist, aufweisend Einnehmen der Posen lediglich in einer Position, in der der Ausleger (7) bezüglich der weiteren horizontal verlaufenden Achse (A3) entweder eine Winkelstellung zwischen 0° und 180° oder eine Winkelstellung zwischen 180° und 360° bezüglich einer vertikal verlaufenden Achse (A1) einnimmt.

6. Verfahren nach einem der Ansprüche 1 bis 5, aufweisend folgende zusätzliche Verfahrensschritte:
- Bewegen des Roboterarms (2) in mehrere weitere Posen, wobei das zumindest eine der Glieder (4) zumindest beim Anfahren der einzelnen weiteren Posen jeweils in derselben, zur ersten Bewegungsrichtung (18) entgegen gesetzten zweiten Bewegungsrichtung (19) mittels seines Antriebs (11) bewegt wird, und
- jeweiliges Vermessen des Roboterarms (2) in seinen weiteren Posen, um ein weiteres Robotermodell (17a) vom Industrieroboter (1) zu erhalten.

7. Verfahren zum Planen einer Bahn eines Industrieroboters, der einen Roboterarm (2) mit mehreren, nacheinander folgenden Gliedern (3-8) aufweist, die mittels Antrieben (11-16) über Getriebe (5) bezüglich Achsen (A1-A6) gesteuert durch eine Steuervorrichtung (10) des Industrieroboters (1) bewegbar sind, und in der Steuervorrichtung (10) ein Robotermodell (17) des Industrieroboters (1) gespeichert ist, das gemäß dem Verfahren nach einem der Ansprüche 1 bis 6 erstellt wurde, aufweisend Planen einer durchzuführenden Bahn des Industrieroboters (1) basierend auf dem Robotermodell (17), wobei der Roboterarm (2) derart in Posen bewegt werden soll, dass zumindest das relevante Glied (4) der Glieder zumindest beim Anfahren der einzelnen Posen relativ zu seiner Achse (A1) jeweils in derselben ersten Bewegungsrichtung (18) mittels seines Antriebs (11)bewegt wird.

8. Verfahren zum Planen einer Bahn eines Industrieroboters, der einen Roboterarm (2) mit mehreren, nacheinander folgenden Gliedern (3-8) aufweist, die mittels Antrieben (11-16) über Getriebe (5) bezüglich Achsen (A1-A6) gesteuert durch eine Steuervorrichtung (10) des Industrieroboters (1) bewegbar sind, und in der Steuervorrichtung (10) Robotermodelle (17, 17a) des Industrieroboters (1) gespeichert sind, die gemäß dem Verfahren nach Anspruch 6 erstellt wurden, aufweisend Planen einer durchzuführenden Bahn des Industrieroboters (1), wobei je nachdem, mit welcher Bewegungsrichtung (18, 19) des relevanten Glieds (4) der Glieder eine Pose angefahren wird, das Planen der durchzuführenden Bahn entweder auf dem Robotermodell (17) oder auf dem weiteren Robotermodell (17a) basiert.

9. Industrieroboter, aufweisend einen Roboterarm (2) mit mehreren, nacheinander folgenden Gliedern (3-8), die mittels Antrieben (11-16) über Getriebe (5) bezüglich Achsen (A1-A6) gesteuert durch eine Steuervorrichtung (10) des Industrieroboters (1) bewegbar sind, wobei in der Steuervorrichtung (10) ein Robotermodell (17) des Industrieroboters (1) gespeichert ist, das gemäß dem Verfahren nach einem der Ansprüche 1 bis 6 erstellt wurde.

10. Industrieroboter nach Anspruch 9, bei dem das Robotermodell (17) ein absolutgenaues Robotermodell ist und/oder bei dem die Achse (A1), bezüglich der das relevante Glied (4) verstellbar ist, eine Drehachse ist, bezüglich der das relevante Glied (4)drehbar ist.

## Claims

1. Method for creating a robot model of an industrial robot, which comprises a robotic arm (2) with a plurality of successively arranged links (3-8) which can be adjusted by means of drives (11-16) via gears (5) relative to axes (A1-A2) controlled by a control device (10) of the industrial robot (1) comprising the following method steps:
- moving the robotic arm (2) into a plurality of poses, at least one of the links (4) being moved respectively by means of its drive (11) in the same first direction of movement (18) at least on approaching the individual poses, and
- measuring the robotic arm (2) in its poses in order to obtain the robot model (17).

2. Method according to claim 1, in which the robot model (17) is an absolutely accurate robot model and/or the axis (A1), relative to which the relevant link (4) can be adjusted, is an axis of rotation relative to which the relevant link (4) can rotate.

3. Method according to claim 2, in which the axis of rotation (A1), about which the relevant link (4) can rotate, is preferably or exclusively a vertical axis of rotation (A1).

4. Method according to claim 2, in which the robotic arm (2) comprises a robotic hand (8) and the axis of rotation (A4-A6), about which the relevant link can rotate, is a hand axis assigned to the robotic hand (8).

5. Method according to any of claims 1 to 4, in which as one of the links the robotic arm (2) comprises a swing arm (6) mounted rotatably about a horizontal axis (A2) and as an additional link comprises a cross arm (7) mounted relative to an additional horizontal axis (A3) and mounted to rotate relative to the swing arm (6), comprising adopting the poses only in a position in which the cross arm (7) adopts either an angular position between 0° and 180° relative to the additional horizontal axis (A3) or an angular position between 180° and 360° relative to a vertical axis (A1).

6. Method according to any of claims 1 to 5, comprising the following additional method steps:
- moving the robotic arm (2) into a plurality of additional poses, wherein at least one of the links (4) is moved by means of its drive (11) at least on approaching the individual additional poses in the same second direction of movement opposite the first direction of movement (18), and
- measuring the robotic arm (2) in its additional poses in order to obtain an additional robot model (17a) of the industrial robot (1).

7. Method for planning a path of an industrial robot which comprises a robotic arm (2) with a plurality of successively arranged links (3-8), which can be moved by means of drives (11-16) via gears (5) relative to axes (A1-A6) controlled by a control device (10) of the industrial robot (1), and a robot model (17) of the industrial robot (1) is saved in the control device (10), the robot model being created by the method according to any of claims 1 to 6, comprising planning a path to be executed by the industrial robot (1) based on the robot model (17), wherein the robotic arm (2) is to be moved into poses such that at least the relevant link (4) is moved by means of its drive (11) at least on approaching the individual poses relative to its axis (A1) in the same first direction of movement (18).

8. Method for planning a path of an industrial robot which comprises a robotic arm (2) with a plurality of successively arranged links (3-8), which can be moved by means of drives (11-16) via gears (5) relative to axes (A1-A6) controlled by a control device (10) of the industrial robot (1), and robot models (17, 17a) of the industrial robot (1) are saved in the control device (10) which were created by the method according to claim 6, comprising planning a path of the industrial robot (1) to be executed, wherein depending on the direction of movement (18, 19) of the relevant link (4) in which a pose is approached the planning of the path to be executed is based either on the robot model (17) or on the additional robot model (17a).

9. Industrial robot, comprising a robotic arm (2) with a plurality of successively arranged links (3-8), which can be moved by means of drives (11-16) via gears (5) relative to axes (A1-A6) controlled by a control device (10) of the industrial robot (1), wherein a robot model (17) of the industrial robot (1) is saved in the control device (10), the robot model being created by using the method according to any of claims 1 to 6.

10. Industrial robot according to claim 9, in which the robot model (17) is an absolutely accurate robot model and/or in which the axis (A1), relative to which the relevant link (4) can be adjusted, is an axis of rotation, relative to which the relevant link (4) can be rotated.

## Revendications

1. Procédé d'élaboration d'un modèle de robot industriel qui présente un bras de robot (2) avec plusieurs membres (3-8) qui se succèdent et qui sont réglables au moyen d'entraînements (11-16) via des transmissions (5) par rapport à des axes (A1-A2) et qui sont commandés par un dispositif de commande (10) du robot industriel (1), présentant les étapes de procédé suivantes :
- déplacement du bras de robot (2) dans plusieurs poses, au moins un des membres (4) étant déplacé, au moins lors de son amenée vers les différentes poses, dans la même première direction de déplacement (18) au moyen de son entraînement (11), et
- mesurage respectif du bras de robot (2) dans ses poses pour obtenir le modèle de robot (17).

2. Procédé selon la revendication 1, dans lequel le modèle de robot (17) est un modèle de robot à précision absolue, et/ou l'axe (A1) par rapport auquel le membre principal (4) est réglable est un axe de rotation par rapport auquel le membre principal (4) est rotatif.

3. Procédé selon la revendication 2, dans lequel l'axe de rotation (A1) autour duquel le membre principal (4) est rotatif, est de préférence ou exclusivement un axe de rotation (A1) s'étendant à la verticale.

4. Procédé selon la revendication 2, dans lequel l'arbre de robot (2) présente une main de robot (8), et l'axe de rotation (A4-A6) autour duquel le membre principal est rotatif, est un axe de main associé à une main de robot (8).

5. Procédé selon l'une des revendications 1 à 4, dans lequel le bras de robot (2) présente, en tant que l'un des membres, un bras oscillant (6) monté rotatif autour d'un axe (A2) qui s'étend à l'horizontale et, en tant qu'un autre des membres, une potence (7) montée rotative par rapport au bras oscillant (6) et montée par rapport à un autre axe (A3) qui s'étend à l'horizontale, présentant la prise des poses seulement dans une position dans laquelle la potence (7) prend, par rapport l'autre axe (A3) s'étendant à l'horizontale, soit une position angulaire entre 0° et 180° soit une position angulaire entre 180° et 360° par rapport à un axe (A1) qui s'étend à la verticale.

6. Procédé selon l'une des revendications 1 à 5, présentant les étapes de procédé supplémentaires suivantes :
- déplacement du bras de robot (2) dans plusieurs autres poses, au moins l'un des membres (3) étant déplacé, au moins lors de son amenée vers les différentes poses, dans la même deuxième direction de mouvement (19) opposée à la première direction de déplacement (18) au moyen de son entraînement (11), et
- mesurage respectif du bras de robot (2) dans ses autres poses pour obtenir un autre modèle de robot (17a) du robot industriel (1).

7. Procédé de planification d'une trajectoire d'un robot industriel qui présente un bras de robot (2) avec plusieurs membres (3-8) qui peuvent être déplacés au moyen d'entraînements (11-16) via des transmissions (5) par rapport à des axes (A1-A6) qui sont commandés par un dispositif de commande (10) du robot industriel (1), et dans le dispositif de commande (10) est mémorisé un modèle de robot (17) du robot industriel (1) qui a été élaboré selon un procédé selon l'une des revendications 1 à 6, présentant la planification d'une trajectoire du robot industriel (1) à effectuer sur la base du modèle de robot (17), le bras de robot (2) devant être déplacé dans des poses de telle sorte qu'au moins le membre principal (4) des membres, au moins lors de son amenée dans les différentes poses par rapport à son axe (A1), est déplacé dans la même première direction de déplacement (18) respective au moyen de son entraînement (11).

8. Procédé de planification d'une trajectoire d'un robot industriel qui présente un bras de robot (2) avec plusieurs membres (3-8) qui peuvent être déplacés au moyen d'entraînements (11-16) via des transmissions (5) par rapport à des axes (A1-A6) et qui sont commandés par un dispositif de commande (10) du robot industriel (1), et dans le dispositif de commande (10) sont mémorisés des modèles de robot (17, 17a) du robot industriel (1) qui ont été élaborés selon le procédé selon la revendication 6, présentant la planification d'une trajectoire du robot industriel (1) à effectuer, et selon la direction de déplacement (18, 19) avec laquelle le membre important (4) des membres est amené vers une pose, la planification de la trajectoire à effectuer se base soit sur le modèle de robot (17) soit sur l'autre modèle de robot (17a).

9. Robot industriel présentant un bras de robot (2) avec plusieurs membres (3-8) qui se succèdent et qui, commandés par un dispositif de commande du robot industriel (1), peuvent être déplacés au moyens d'entraînements (11-16) via des transmissions (5) par rapport à des axes (A1-A6), dans le dispositif de commande (10) étant mémorisé un modèle de robot (17) du robot industriel (1) qui a été élaboré selon le procédé selon l'une des revendications 1 à 6.

10. Robot industriel selon la revendication 9, dans lequel le modèle de robot (17) est un modèle de robot à précision absolue et/ou dans lequel l'axe (A1) par rapport auquel le membre important (4) est réglable, est un axe de rotation par rapport auquel le membre important (4) est rotatif.
